# EUROPEAN PATENT SPECIFICATION

(11) **EP 2 861 428 B1**
(45) Date of publication and mention of the grant of the patent: **22.05.2019**
(21) Application number: 13727624.2
(22) Date of filing: 10.06.2013
(51) Int. Cl.: B42D 25/425, B42D 25/324, B42D 25/328, B42D 25/351, B42D 25/373

(54) **METHOD FOR MANUFACTURING SECURITY ELEMENTS AND HOLOGRAMS**
VERFAHREN ZUR HERSTELLUNG VON SICHERHEITSELEMENTEN UND HOLOGRAMMEN
PROCÉDÉ DESTINÉ À FABRIQUER DES ÉLÉMENTS DE SÉCURITÉ ET DES HOLOGRAMMES

(30) Priority: 14.06.2012 US 201261659479 P; 14.06.2012 EP 12172013
(43) Date of publication of application: 22.04.2015
(73) Proprietor: BASF SE, 67056 Ludwigshafen am Rhein (DE)
(72) Inventor: RICHERT, Michelle, F-68110 Illzach (FR); FLEURY, Roland, CH-4222 Zwingen (CH); GRIGORENKO, Nikolay A., CH-4313 Möhlin (CH)
(74) Representative: BASF IP Association
(86) International application number: PCT/EP2013/061909
(87) International publication number: WO 2013/186167

(56) References cited:
- WO-A1-2010/069823
- WO-A2-2005/051675
- WO-A2-2011/064162

## Description

The present invention relates to a method for forming a surface relief microstructure, especially an optically variable image a substrate, in particular on a transparent or translucent substrate and a product obtainable using the method.

There have been many attempts in the past to improve the manufacture of security elements by forming optically variable images (optically variable devices, OVD) on a substrate. WO2005051675 is directed to a method for forming a holographic diffraction grating on a substrate comprising the steps of: a) applying a curable compound to at least a portion of the substrate; b) contacting at least a portion of the curable compound with diffraction grating forming means; c) curing the curable compound and d) depositing a metallic ink on at least a portion of the cured compound.

WO 2011/064162 discloses the use of coating compositions, comprising shaped transition metal, especially silver, particles and a binder, wherein the ratio of pigment to binder is preferably such that the resulting coating shows an angle dependent color change, for the production of security elements and holograms. When the coating compositions of the invention are used in coating a hologram the obtained products show an angle dependent color change (flip/flop effect), different colors in reflection and transmission. The method of preparation comprises two steps. Firstly a typically transparent binder is applied into which an OVD image is embossed and afterwards cured. In a second step a coating is applied onto the OVD image containing nano-shaped particles of a specific geometry.

It has now been found, that the process can be significantly simplified without sacrificing the optical properties, such as high contrast, strong viewing angle dependency and high throughput by using a one step process, which means only one embossing and one curing step. The coating is a UV curable composition which contains additionally specifically shaped metal particles. The term coating is used in this context as synonym for ink or varnish.

In one embodiment it is a specific feature of the process that the curing step is carried out through the backside of the substrate which, therefore, has to be transparent or translucent. This is of advantage since a conventional rotating metallic printing press can be used for embossing with the respective embossing means mounted at the surface.

The alternatives for curing from the front side are the so-called transparent shims which possess several disadvantages. Quartz is not robust enough and leads to a slow process. In addition, transparent shims (belts, or sleeves) can be only used a few times due to ageing under UV-light (polymer shims) and printing in register is very difficult.

There exists a need for efficient systems and methods for printing microstructures (surface relief structures) on a substrate, in particular on a transparent or translucent substrate that fully incorporates surface relief technologies into mainstream printing applications such as secure documents, flexible and rigid packaging, labels, and printed forms.

The instant invention allows printing microstructures on a substrate, in particular on a transparent or translucent substrate embossing and metallizing of the surface relief in one process step using a conventional printing system such as flexography, rotogravure, offset printing, silkscreen printing, digital printing, and ink jet printing.

One aspect of the invention is a method for forming a surface relief microstructure as defined in claim 1.

In a specific embodiment of the invention there is provided a method for forming a surface relief microstructure, especially an optically variable image on a transparent or translucent substrate comprising the steps of:
A) applying a curable composition to at least a portion of the frontside of the substrate wherein the curable composition comprises
   a1) at least one ethylenically unsaturated resin, monomer or mixture thereof;
   a2) at least one photoinitiator; and
   a3) a metal pigment which is in the form of platelet shaped transition metal particles having a longest dimension of edge length of from 5 nm to 1000 nm, preferably from 7 nm to 600 nm and particularly from 10 nm to 500 nm, and a thickness of from 1 nm to 100 nm, preferably from 2 to 40 nm and particularly from 3 to 30 nm;
B) contacting at least a portion of the curable composition with a surface relief microstructure, especially optically variable image forming means;
C) curing the composition by using at least one UV lamp which is arranged on the backside of the transparent or translucent substrate.

The invention is typically carried out on an apparatus for forming a surface relief microstructure on a substrate, which is coated with a curable composition (varnish) on at least part of its frontside comprising a printing press and surface relief microstructure forming means, wherein the microstructure forming means comprise
a) surface relief microstructure forming means, especially a shim which carries the micostructure to be casted into the curable composition, and
b) a lamp having emission peak(s) in the UV-A range and preferably near VIS range for curing the curable composition when the coated subtrate is pressed against the shim.

In a preferred embodiment a (printing) apparatus comprises
a) mechanism for feeding a substrate through the apparatus,
b) a coating station comprising a source of a liquid UV curable composition and means for applying a liquid composition from the source to a surface of the substrate,
c) an embossing/curing station comprising means for imprinting a (surface relief) microstructure into the surface of the applied composition on the substrate, and means for curing the resin having (surface relief) microstructures imprinted therein such that these micro-structures are retained in the cured resin, wherein the apparatus is arranged such that the composition is applied to the top surface of the substrate; that the means for imprinting the (surface relief) microstructure comprises is a nickel plate mounted on an opaque cylinder or metal cylinder having a (surface relief) microstructure and two nip rollers which contact the back surface of the substrate and which have an axis of rotation that is along the same axis as the axis of rotation of the cylinder and the means for curing the resin is a UV source located at the back surface of the substrate.

In one embodiment the apparatus may be an off-line or stand-alone unit or in an alternative, preferred embodiment this may be an in-line or integrated system with other further conventional printing, laminating, cutting, slitting and other converting stations as part of an integrated manufacturing process. In one embodiment the apparatus and processes may be configured and used to provide partial holographic printing of a web based substrate. This may be achieved by partially printing the radiation curable lacquer as for example graphic elements onto the web based substrate and replicating the surface relief microstructure only in that areas where the radiation curable lacquer has been printed.

In a further embodiment the apparatus may further comprise a UV-post-curing unit with or without a heating unit, or just an IR-heating unit, or combined UV/IR, which may be especially recommended in order to support and speed up the curing of varnish systems. This post curing unit may be used when the coated substrate leaving the printing/curing unit although successfully imprinted is not fully cured. The post-curing unit ensures that the coating is fully cured.

According to the present invention curing is preferably done through the substrate and not through the shim (UV source located within the bore of a hollow quartz cylinder etc.).

The surface relief microstructure forming means is preferably a shim, which is selected from the group consisting of a nickel sleeve; a nickel plate; an etched, or laser imaged metallic drum, or other materials mounted on an opaque cylinder or metal cylinder containing the OVD image on the surface. The surface relief microstructure forming means may comprise means for cooling.

A UV-pre-curing unit may be located after the UV lacquer coating unit and before the embossing/curing unit. The pre-curing unit irradiates the radiation curable composition coated on the web substrate so that it is at least partially cured before it enters the embossing/curing station.

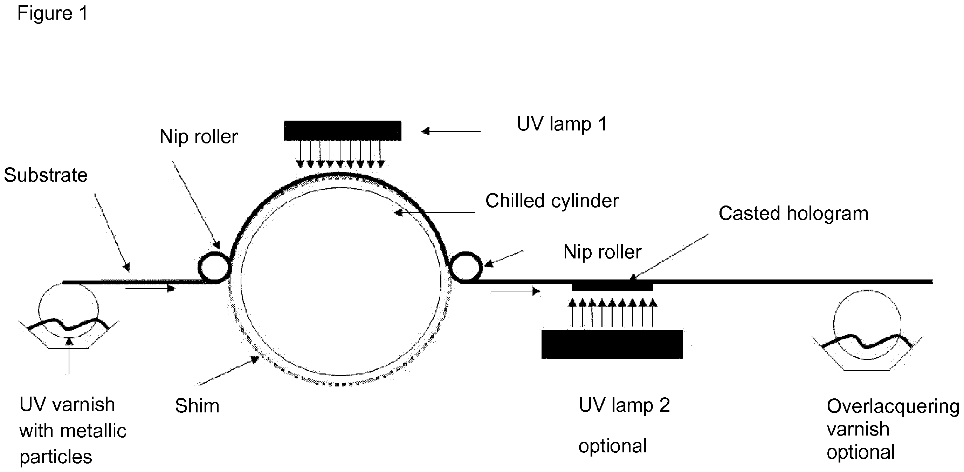

Surface relief microstructures, such as holograms may be replicated rapidly and with accuracy on a substrate by using the method of the present invention and the above described apparatus. Fig. 1 shows a schematic representation of a suitable configuration as described above.

Preferably the lamp used for curing the composition is a gallium, or iron doped medium pressure mercury lamp.

Typically the photoinitiator is selected from benzophenone, alpha-hydroxy ketone type compounds, alpha-alkoxy ketone type compounds, alpha-amino ketone type compounds, mono and bisacylphosphine oxide compounds, phenylglyoxylate compounds, oxim ester compounds and onium salt compounds (sulfonium salt compounds and iodoinium salt compounds) and mixtures thereof.

For example the photoinitiator is selected from mono and bisacylphosphine oxide compounds, alpha-amino ketone type compounds, oxim ester compounds or mixtures thereof.

In a preferred embodiment the photoinitiator is selected from mono and bisacylphosphine oxide compounds and mixtures thereof.

Alternatively the curable composition comprises a mixture of a mono, or a bisacylphosphine oxide compound with a benzophenone compound, an alpha-hydroxy ketone, alpha-alkoxyketone, or alpha-aminoketone compound.

The, at present most preferred photinitiators are mono and bisacylphosphine oxide compounds. Mono and bisacylphosphine oxide compounds can be used alone. Alternatively, a mixture of a mono and a bisacylphosphine oxide compound can be used, or the mono and bisacylphosphine oxide compounds can be used in admixture with other photoinitiators, such as, for example, the benzophenone type, alpha-amino ketone type, alpha-hydroxy ketone type, ketal compounds, phenylglyoxylate compounds, oxime ester compounds or onium salt compounds, especially a benzophenone compound, an alpha-hydroxy ketone, alpha-alkoxyketone, or alpha-aminoketone compound, very especially a benzophenone compound, an alpha-hydroxy ketone, or alpha-alkoxyketone compound. An alpha-aminoketone compound can be used, alone or in mixtures with other photoinitiators, if yellowing is not an issue.

Examples of photoinitiators are known to the person skilled in the art and for example published by Kurt Dietliker in "A compilation of photoinitiators commercially available for UV today", Sita Technology Textbook, Edinburgh, London, 2002.

Examples of suitable acylphosphine oxide compounds are of the formula XII 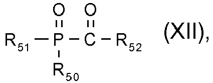 wherein
R₅₀ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C₁₂alkyl, C₁-C₁₂alkoxy, C₁-C₁₂alkylthio or by NR₅₃R₅₄;
or R₅₀ is unsubstituted C₁-C₂₀alkyl or is C₁-C₂₀alkyl which is substituted by one or more halogen, C₁-C₁₂alkoxy, C₁-C₁₂alkylthio, NR₅₃R₅₄ or by -(CO)-O-C₁-C₂₄alkyl;
R₅₁ is unsubstituted cyclohexyl, cyclopentyl, phenyl, naphthyl or biphenylyl; or is cyclohexyl, cyclopentyl, phenyl, naphthyl or biphenylyl substituted by one or more halogen, C₁-C12alkyl, C₁-C₁₂alkoxy, C₁-C₁₂alkylthio or by NR₅₃R₅₄; or R₅₁ is -(CO)R'₅₂; or R₅₁ is C₁-C₁₂alkyl which is unsubstituted or substituted by one or more halogen, C₁-C₁₂alkoxy, C₁-C₁₂alkylthio, or by NR₅₃R₅₄;
R₅₂ and R'₅₂ independently of each other are unsubstituted cyclohexyl, cyclopentyl, phenyl, naphthyl or biphenylyl, or are cyclohexyl, cyclopentyl, phenyl, naphthyl or biphenylyl substituted by one or more halogen, C₁-C₄alkyl or C₁-C₄alkoxy; or R₅₂ is a 5- or 6-membered heterocyclic ring comprising an S atom or N atom;
R₅₃ and R₅₄ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₃ and R₅₄ independently of one another are C₂-C₁₂-alkenyl, cyclopentyl, cyclohexyl, benzyl or phenyl;

Specific examples are bis(2,4,6-trimethylbenzoyl)-phenylphosphine oxide (lrgacure®819); 2,4,6-trimethylbenzoyl-diphenyl-phosphine oxide (Darocur®TPO); ethyl (2,4,6 trimethylbenzoyl phenyl) phosphinic acid ester; (2,4,6-trimethylbenzoyl)-2,4-dipentoxyphenylphosphine oxide, bis(2,6-dimethoxybenzoyl)-2,4,4-trimethylpentylphosphine oxide.
Interesting further are mixtures of the compounds of the formula XII with compounds of the formula XI as well as mixtures of different compounds of the formula XII.
Examples are mixtures of bis(2,6-dimethoxybenzoyl)-2,4,4-trimethylpentylphosphine oxide with 1-hydroxy-cyclohexyl-phenyl-ketone, of bis(2,4,6-trimethylbenzoyl)-phenylphosphine oxide with 2-hydroxy-2-methyl-1-phenyl-propan-1-one, of bis(2,4,6-trimethylbenzoyl)-phenylphosphine oxide with ethyl (2,4,6 trimethylbenzoyl phenyl) phosphinic acid ester, etc.

Examples of suitable benzophenone compounds are compounds of the formula X: 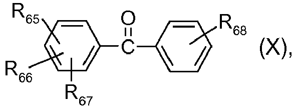 wherein
R₆₅, R₆₆ and R₆₇ independently of one another are hydrogen, C₁-C₄alkyl, C₁-C₄-halogenalkyl, C₁-C₄alkoxy, Cl or N(C₁-C₄alkyl)₂;
R₆₈ is hydrogen, C₁-C₄alkyl, C₁-C₄halogenalkyl, phenyl, N(C₁-C₄alkyl)₂, COOCH₃, 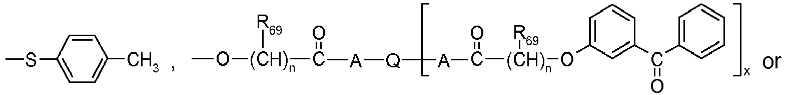 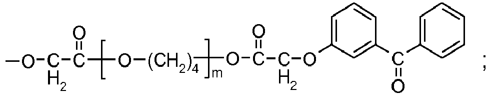
Q is a residue of a polyhydroxy compound having 2 to 6 hydroxy groups;
x is a number greater than 1 but no greater than the number of available hydroxyl groups in Q;
A is -[O(CH₂)_{b}CO]_{y}- or -[O(CH₂)_{b}CO]_{(y-1)}-[O(CHR₇₁CHR₇₀)ₐ]_{y}-;
R₆₉ is hydrogen, methyl or ethyl; and if N is greater than 1 the radicals R₆₉ may be the same as or different from each other;
a is a number from 1 to 2;
b is a number from 4 to 5;
y is a number from 1 to 10;
n is; and
m is an integer 2-10.

Specific examples are Darocur®BP (= benzophenone), Esacure TZT® available from Lamberti, (a mixture of 2,4,6-trimethylbenzophenone and 4-methylbenzophenone), 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)benzophenone, 3,3'-dimethyl-4-methoxybenzophenone, methyl-2-benzoylbenzoate, 4-(2-hydroxyethylthio)benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)benzophenone, 4-benzoyl-N,N-dimethyl-N-[2-(1-oxo-2-propenyl)oxy]ethylbenzenemethanaminium chloride; [4-(2-hydroxy-ethylsulfanyl)-phenyl]-(4-isopropylphenyl)-methanone; biphenyl-[4-(2-hydroxy-ethylsulfanyl)-phenyl]-methanone; biphenyl-4-yl-phenyl-methanone; biphenyl-4-yl-p-tolyl-methanone; biphenyl-4-yl-m-tolyl-methanone; [4-(2-hydroxy-ethylsulfanyl)-phenyl]-p-tolyl-methanone; [4-(2-hydroxy-ethylsulfanyl)-phenyl]-(4-isopropyl-phenyl)-methanone; [4-(2-hydroxy-ethylsulfanyl)-phenyl]-(4-methoxy-phenyl)-methanone; 1-(4-benzoyl-phenoxy)-propan-2-one; [4-(2-hydroxy-ethylsulfanyl)-phenyl]-(4-phenoxy-phenyl)-methanone; 3-(4-benzoyl-phenyl)-2-dimethylamino-2-methyl-1-phenyl-propan-1-one; (4-chloro-phenyl)-(4-octylsulfanyl-phenyl)-methanone; (4-chloro-phenyl)-(4-dodecylsulfanyl-phenyl)-methanone; (4-bromo-phenyl)-(4-octylsulfanyl-phenyl)-methanone; (4-dodecylsulfanyl-phenyl)-(4-methoxy-phenyl)-methanone; (4-benzoyl-phenoxy)-acetic acid methyl ester; biphenyl-[4-(2-hydroxy-ethylsulfanyl)-phenyl]-methanone; 1-[4-(4-benzoylphenylsulfanyl)phenyl]-2-methyl-2-(4-methylphenylsulfonyl)propan-1-one (Esacure®1001 available from Lamberti).

Examples of suitable alpha-hydroxy ketone, alpha-alkoxyketone or alpha-aminoketone compounds are of the formula (XI) 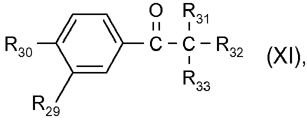 wherein
R₂₉ is hydrogen or C₁-C₁₈alkoxy;
R₃₀ is hydrogen, C₁-C₁₈alkyl, C₁-C₁₂hydroxyalkyl C₁-C₁₈alkoxy, OCH₂CH₂-OR₃₄, morpholino, S-C₁-C₁₈alkyl, a group -HC=CH₂, -C(CH₃)=CH₂, 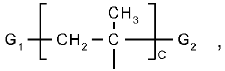 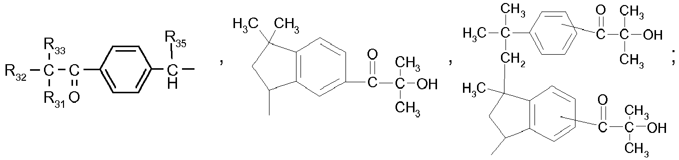 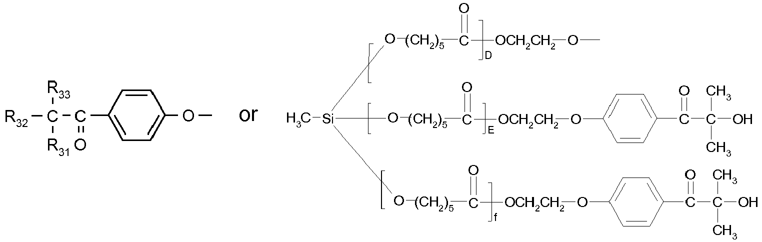
d, e and fare 1-3;
c is 2-10;
G₁ and G₂ independently of one another are end groups of the polymeric structure, preferably hydrogen or methyl;
R₃₄ is hydrogen, 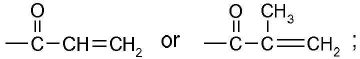
R₃₁ is hydroxy, C₁-C₁₆alkoxy, morpholino, dimethylamino or -O(CH₂CH₂O)_{g}-C₁-C₁₆alkyl;
g is 1-20;
R₃₂ and R₃₃ independently of one another are hydrogen, C₁-C₆alkyl, C₁-C₁₆alkoxy or -O(CH₂CH₂O)_{g}-C₁-C₁₆alkyl; or are unsubstituted phenyl or benzyl; or phenyl or benzyl substituted by C₁-C₁₂-alkyl; or R₃₂ and R₃₃ together with the carbon atom to which they are attached form a cyclohexyl ring;
R₃₅ is hydrogen, OR₃₆ or NR₃₇R₃₈;
R₃₆ is hydrogen, C₁-C₁₂alkyl which optionally is interrupted by one or more non-consecutive O-atoms and which uninterrupted or interrupted C₁-C₁₂alkyl optionally is substituted by one or more OH,
or R₃₆ is 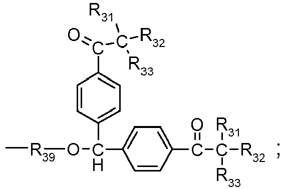
R₃₇ and R₃₈ independently of each other are hydrogen or C₁-C₁₂alkyl which is unsubstituted or is substituted by one or more OH;
R₃₉ is C₁-C₁₂alkylene which optionally is interrupted by one or more non-consecutive O,-(CO)-NH-C₁-C₁₂alkylene-NH-(CO)- or 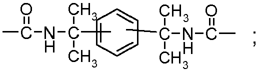
with the proviso that R₃₁, R₃₂ and R₃₃ not all together are C₁-C₁₆alkoxy or -O(CH₂CH₂O)_{g}-C₁-C₁₆alkyl.

Specific examples are 1-hydroxy-cyclohexyl-phenyl-ketone (Irgacure®184) or Irgacur® 500 (a mixture of Irgacure®184 with benzophenone), 2-methyl-1[4-(methylthio)phenyl]-2-morpholinopropan-1-one (Irgacure®907), 2-benzyl-2-dimethylamino-1-(4-morpholinophenyl)-butan-1-one (Irgacure®369), 2-dimethylamino-2-(4-methyl-benzyl)-1-(4-morpholin-4-yl-phenyl)-butan-1-one (Irgacure®379), (3,4-dimethoxy-benzoyl)-1-benzyl-1-dimethylamino propane, 1-[4-(2-hydroxyethoxy)-phenyl]-2-hydroxy-2-methyl-1-propan-1-one (Irgacure®2959), 2,2-dimethoxy-1,2-diphenylethan-1-one (Irgacure®651), 2-hydroxy-2-methyl-1-phenyl-propan-1-one (Darocur®1173), 2-hydroxy-1-{4-[4-(2-hydroxy-2-methylpropionyl)-benzyl]-phenyl}-2-methyl-propan-1-one (Irgacure®127), 2-hydroxy-1-{4-[4-(2-hydroxy-2-methyl-propionyl)-phenoxy]-phenyl}-2-methyl-propan-1-one, Esacure KIP provided by Lamberti, 2-hydroxy-1-{1-[4-(2-hydroxy-2-methyl-propionyl)-phenyl]-1,3,3-trimethyl-indan-5-yl}-2-methyl-propan-1-one.
Irgacure® and Darocur® products are available from BASF SE.

Examples of suitable phenylglyoxylate compounds are of the formula XIII 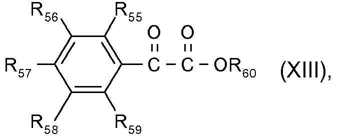 wherein
R₆₀ is hydrogen, C₁-C₁₂alkyl or 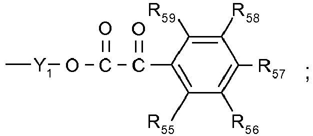
R₅₅, R₅₆, R₅₇, R₅₈ and R₅₉ independently of one another are hydrogen, unsubstituted C₁-C₁₂alkyl or C₁-C₁₂alkyl substituted by one or more OH, C₁-C₄alkoxy, phenyl, naphthyl, halogen or by CN; wherein the alkyl chain optionally is interrupted by one or more oxygen atoms; or R₅₅, R₅₆, R₅₇, R₅₈ and R₅₉ independently of one another are C₁-C₄alkoxy, C₁-C4alkythio or NR₅₂R_{53;}
R₅₂ and R₅₃ independently of one another are hydrogen, unsubstituted C₁-C₁₂alkyl or C₁-C₁₂alkyl substituted by one or more OH or SH wherein the alkyl chain optionally is interrupted by one to four oxygen atoms; or R₅₂ and R₅₃ independently of one another are C₂-C₁₂-alkenyl, cyclopentyl, cyclohexyl, benzyl or phenyl; and
Y₁ is C₁-C₁₂alkylene optionally interrupted by one or more oxygen atoms.

Specific examples of the compounds of the formula XIII are oxo-phenyl-acetic acid 2-[2-(2-oxo-2-phenyl-acetoxy)-ethoxy]-ethyl ester (Irgacure®754), methyl α-oxo benzeneacetate.

Examples of suitable oxime ester compounds are of the formula XIV 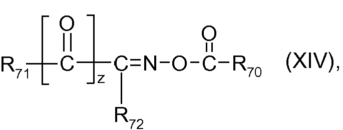 wherein
Z is 0 or 1;
R₇₀ is hydrogen, C₃-C₈cycloalkyl; C₁-C₁₂alkyl which is unsubstituted or substituted by one or more halogen, phenyl or by CN; or R₇₀ is C₂-C₅alkenyl; phenyl which is unsubstituted or substituted by one or more C₁-C₆alkyl, halogen, CN, OR₇₃, SR₇₄ or by NR₇₅R₇₆; or R₇₀ is C₁-C₈alkoxy, benzyloxy; or phenoxy which is unsubstituted or substituted by one or more C₁-C₆alkyl or by halogen;
R₇₁ is phenyl, naphthyl, benzoyl or naphthoyl, each of which is substituted by one or more halogen, C₁-C₁₂alkyl, C₃-C₈cycloalkyl, benzyl, phenoxycarbonyl, C₂-C₁₂alkoxycarbonyl, OR₇₃, SR₇₄, SOR₇₄, SO₂R₇₄ or by NR₇₅R₇₆, wherein the substituents OR₇₃, SR₇₄ and NR₇₅R₇₆ optionally form 5- or 6-membered rings *via* the radicals R₇₃, R₇₄, R₇₅ and/or R₇₆ with further substituents on the phenyl or naphthyl ring; or each of which is substituted by phenyl or by phenyl which is substituted by one or more OR₇₃, SR₇₄ or by NR₇₅R₆₆;
or R₇₁ is thioxanthyl, or 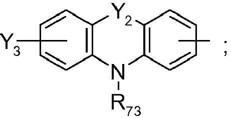
R₇₂ is hydrogen; unsubstituted C₁-C₂₀alkyl or C₁-C₂₀alkyl which is substituted by one or more halogen, OR₇₃, SR₇₄, C₃-C₈cycloalkyl or by phenyl; or is C₃-C₈cycloalkyl; or is phenyl which is unsubstituted or substituted by one or more C₁-C₆alkyl, phenyl, halogen, OR₇₃, SR₇₄ or by NR₇₅R₇₆; or is C₂-C₂₀alkanoyl or benzoyl which is unsubstituted or substituted by one or more C₁-C₆alkyl, phenyl, OR₇₃, SR₇₄ or by NR₇₅R₇₆; or is C₂-C₁₂alkoxycarbonyl, phenoxycarbonyl, CN, CONR₇₅R₇₆, NO₂, C₁-C₄haloalkyl, S(O)_{y}-C₁-C₆alkyl, or S(O)_{y}-phenyl,
y is 1 or 2;
Y₂ is a direct bondor no bond;
Y₃ is NO₂ or 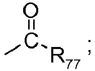
R₇₃ and R₇₄ independently of one another are hydrogen, C₁-C₂₀alkyl, C₂-C₁₂alkenyl, C₃-C₈cycloalkyl, C₃-C₈cycloalkyl which is interrupted by one or more, preferably 2, O, phenyl-C₁-C₃alkyl; or are C₁-C₈alkyl which is substituted by OH, SH, CN, C₁-C₈alkoxy, C₁-C₈alkanoyl, C₃-C₈cycloalkyl, by C₃-C₈cycloalkyl which is interrupted by one or more O,or which C₁-C₈alkyl is substituted by benzoyl which is unsubstituted or substituted by one or more C₁-C₆alkyl, halogen, OH, C₁-C₄alkoxy or by C₁-C₄alkylsulfanyl; or are phenyl or naphthyl, each of which is unsubstituted or substituted by halogen, C₁-C₁₂alkyl, C₁-C₁₂alkoxy, phenyl-C₁-C₃alkyloxy, phenoxy, C₁-C₁₂alkylsulfanyl, phenylsulfanyl, N(C₁-C₁₂alkyl)₂, diphenylamino or by 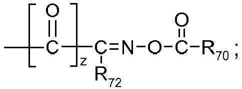
R₇₅ and R₇₆ independently of each other are hydrogen, C₁-C₂₀alkyl, C₂-C₄hydroxyalkyl, C₂-C₁₀alkoxyalkyl, C₂-C₅alkenyl, C₃-C₈cycloalkyl, phenyl-C₁-C₃alkyl, C₁-C₈alkanoyl, C₃-C₁₂alkenoyl, benzoyl; or are phenyl or naphthyl, each of which is unsubstituted or substituted by C₁-C₁₂alkyl, benzoyl or by C₁-C₁₂alkoxy; or R₇₅ and R₇₆ together are C₂-C₆alkylene optionally interrupted by O or NR₇₃ and optionally are substituted by hydroxyl, C₁-C₄alkoxy, C₂-C₄alkanoyloxy or by benzoyloxy;
R₇₇ is C₁-C₁₂alkyl, thienyl or phenyl which is unsubstituted or substituted by C₁-C₁₂alkyl, OR₇₃, morpholino or by N-carbazolyl.

Specific examples are 1,2-octanedione 1-[4-(phenylthio)phenyl]-2-(O-benzoyloxime) (Irgacure® OXE01), ethanone 1-[9-ethyl-6-(2-methylbenzoyl)-9H-carbazol-3-yl]-1-(O-acetyloxime) (Irgacure® OXE02), 9H-thioxanthene-2-carboxaldehyde 9-oxo-2-(O-acetyloxime), ethanone 1-[9-ethyl-6-(4morpholinobenzoyl)-9H-carbazol-3-yl]-1-(O-acetyloxime), ethanone 1-[9-ethyl-6-(2-methyl-4-(2-(1,3-dioxo-2-dimethyl-cyclopent-5-yl)ethoxy)-benzoyl)-9H-carbazol-3-yl]-1-(O-acetyloxime) (Adeka N-1919), ethanone 1-[9-ethyl-6-nitro-9H-carbazol-3-yl]-1-[2-methyl-4-(1-methyl-2-methoxy)ethoxy)phenyl]-1-(O-acetyloxime) (Adeka NCl831), etc.

It is also possible to add cationic photoinitiators, such as benzoyl peroxide (other suitable peroxides are described in US 4 950 581, column 19, lines 17-25), or aromatic sulfonium, phosphonium or iodonium salts, such as are described, for example, in US 4 950 581, column 18, line 60 to column 19, line 10.

Suitable sulfonium salt compounds are of formula XVa, XVb, XVc, XVd or XVe 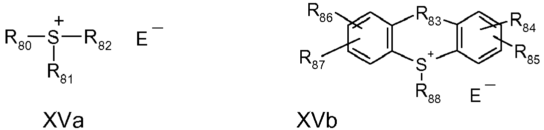 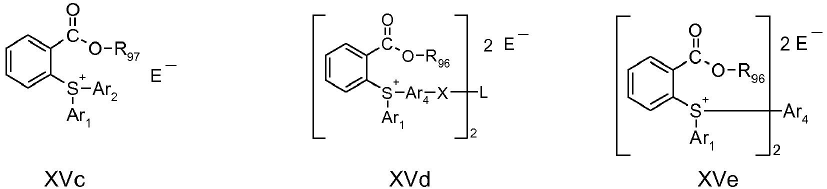 wherein
R₈₀, R₈₁ and R₈₂ are each independently of the others unsubstituted phenyl, or phenyl substituted by -S-phenyl, 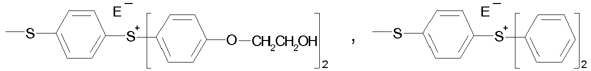 or by 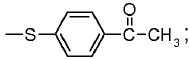
R₈₃ is a direct bond, S, O,CH₂, (CH₂)₂, CO or NR₈₉;
R₃₄, R₈₅, R₈₆ and R₈₇ independently of one another are hydrogen, C₁-C₂₀alkyl, C₃-C₈Cycloalkyl, C₁-C₂₀alkoxy, C₂-C₂₀alkenyl, CN, OH, halogen, C₁-C₆alkylthio, phenyl, naphthyl, phenyl-C₁-C₇alkyl, naphtyl-C₁-C₃alkyl, phenoxy, naphthyloxy, phenyl-C₁-C₇alkyloxy, naphtyl-C₁-C₃alkyloxy, phenyl-C₂-C₆alkenyl, naphthyl-C₂-C₄alkenyl, S-phenyl, (CO)R₈₉, O(CO)R₈₉, (CO)OR₈₉, SO₂R₈₉ or OSO₂R₈₉;
R₈₈ is C₁-C₂₀alkyl, C₁-C₂₀hydroxyalkyl, 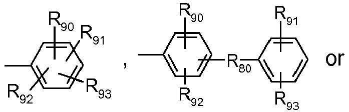 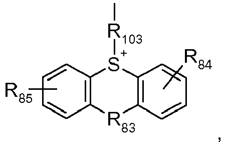
R₈₉ is hydrogen, C₁-C₁₂alkyl, C₁-C₁₂hydroxyalkyl, phenyl, naphthyl or biphenylyl;
R₉₀, R₉₁, R₉₂ and R₉₃ independently of one another have one of the meanings as given for R₈₄; or R₉₀ and R₉₁ are joined to form a fused ring system with the benzene rings to which they are attached;
R₉₅ is a direct bond, S, O or CH₂;
R₉₆ is hydrogen, C₁-C₂₀alkyl; C₂-C₂₀alkyl interrupted by one or more O; or is -L-M-R₉₈ or -L-R₉₈;
R₉₇has one of the meanings as given for R₉₆ or is 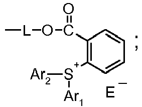
R₉₈ is a monovalent sensitizer or photoinitiator moiety;
Ar₁ and Ar₂ independently of one another are phenyl unsubstituted or substituted by C₁-C₂₀alkyl, halogen or OR₉₉;
or are unsubstituted naphthyl, anthryl, phenanthryl or biphenylyl;
or are naphthyl, anthryl, phenanthryl or biphenylyl substituted by C₁-C₂₀alkyl, OH or OR₉₉; or are -Ar₄-A₁-Ar₃ or 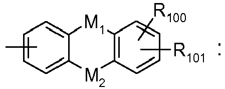
Ar₃ is unsubstituted phenyl, naphthyl, anthryl, phenanthryl or biphenylyl;
or is phenyl, naphthyl, anthryl, phenanthryl or biphenylyl substituted by C₁-C₂₀alkyl, OR₉₉ or benzoyl;
Ar₄ is phenylene, naphthylene, anthrylene or phenanthrylene;
A₁ is a direct bond, S, O or C₁-C₂₀alkylene;
X is CO, C(O)O, OC(O), O,S or NR₉₉;
L is a direct bond, S, O,C₁-C₂₀alkylene or C₂-C₂₀alkylene interrupted by one or more non-consecutive O;
R₉₉ is C₁-C₂₀alkyl or C₁-C₂₀hydroxyalkyl; or is C₁-C₂₀alkyl substituted by O(CO)R₁₀₂;
M₁ is S, CO or NR₁₀₀;
M₂ is a direct bond, CH₂, O or S;
R₁₀₀ and R₁₀₁ independently of one another are hydrogen, halogen, C₁-C₈alkyl, C₁-C₈alkoxy or phenyl;
R₁₀₂ is C₁-C₂₀alkyl;
R₁₀₃ is 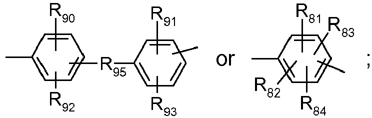 and
E is an anion, especially PF₆, SbF₆, AsF₆, BF₄, (C₆F₅)₄B, CI, Br, HSO₄, CF₃-SO₃, F-SO₃, 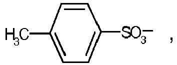 CH₃-SO₃, ClO₄, PO₄, NO₃, SO₄, CH₃-SO₄, or

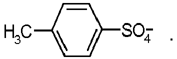

Specific examples of sulfonium salt compounds are for example lrgacure®270 (BASF SE); Cyracure® UVI-6990, Cyracure®UVI-6974 (Union Carbide), Degacure®KI 85 (Degussa), SP-55, SP-150, SP-170 (Asahi Denka), GE UVE 1014 (General Electric), SarCat®KI-85 (= triarylsulfonium hexafluorophosphate; Sartomer), SarCat® CD 1010 (= mixed triarylsulfonium hexafluoroantimonate; Sartomer); SarCat® CD 1011(= mixed triarylsulfonium hexafluorophosphate; Sartomer),

Suitable iodonium salt compounds are of formula XVI 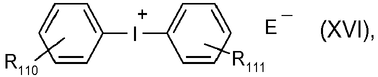 wherein
R₁₁₀ and R₁₁₁ are each independently of the other hydrogen, C₁-C₂₀alkyl, C₁-C₂₀alkoxy, OH-substituted C₁-C₂₀alkoxy, halogen, C₂-C₁₂alkenyl, C₃-C₈cycloalkyl, especially methyl, iso-propyl or isobutyl; and
E is an anion, especially PF₆, SbF₆, AsF₆, BF₄, (C₆F₅)₄B, Cl, Br, HSO₄, CF₃-SO₃, F-SO₃, 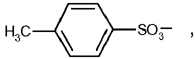 CH₃-SO₃, ClO₄, PO₄, NO₃, SO₄, CH₃-SO₄ or

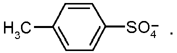

Specific examples of iodonium salt compounds are e.g. tolylcumyliodonium tetrakis(pentafluorophenyl)borate, 4-[(2-hydroxy-tetradecyloxy)phenyl]phenyliodonium hexafluoroantimonate or hexafluorophosphate, tolylcumyliodonium hexafluorophosphate, 4-isopropylphenyl-4'-methylphenyliodonium hexafluorophosphate, 4-isobutylphenyl-4'-methylphenyliodonium hexafluorophosphate (Irgacure®250, BASF SE), 4-octyloxyphenyl-phenyliodonium hexafluorophosphate or hexafluoroantimonate, bis(dodecylphenyl)iodonium hexafluoroantimonate or hexafluorophosphate, bis(4-methylphenyl)iodonium hexafluorophosphate, bis(4-methoxyphenyl)iodonium hexafluorophosphate, 4-methylphenyl-4'-ethoxyphenyliodonium hexafluorophosphate, 4-methylphenyl-4'-dodecyl-phenyliodonium hexafluorophosphate, 4-methylphenyl-4'-phenoxyphenyliodonium hexafluorophosphate.
Of all the iodonium salts mentioned, compounds with other anions are, of course, also suitable. The preparation of iodonium salts is known to the person skilled in the art and described in the literature, for example US 4151175, US 3862333, US 4694029, EP 562897, US 4399071, US 6306555, WO 98/46647 J. V. Crivello, "Photoinitiated Cationic Polymerization" in: UV Curing: Science and Technology, Editor S. P. Pappas, pages 24-77, Technology Marketing Corporation, Norwalk, Conn. 1980, ISBN No. 0-686-23773-0; J. V. Crivello, J. H. W. Lam, Macromolecules, 10, 1307 (1977) and J. V. Crivello, Ann. Rev. Mater. Sci. 1983, 13, pages 173-190 and J. V. Crivello, Journal of Polymer Science, Part A: Polymer Chemistry, Vol. 37, 4241-4254 (1999).

Halogen is fluorine, chlorine, bromine and iodine.

C₁-C₂₄alkyl (C₁-C₂₀alkyl, especially C₁-C₁₂alkyl) is typically linear or branched, where possible. Examples are methyl, ethyl, n-propyl, isopropyl, n-butyl, sec.-butyl, isobutyl, tert.-butyl, n-pentyl, 2-pentyl, 3-pentyl, 2,2-dimethylpropyl, 1,1,3,3-tetramethylpentyl, n-hexyl, 1-methylhexyl, 1,1,3,3,5,5-hexamethylhexyl, n-heptyl, isoheptyl, 1,1,3,3-tetramethylbutyl, 1-methylheptyl, 3-methylheptyl, n-octyl, 1,1,3,3-tetramethylbutyl and 2-ethylhexyl, n-nonyl, decyl, undecyl, dodecyl, tridecyl, tetradecyl, pentadecyl, hexadecyl, heptadecyl, or octadecyl. C₁-C₈alkyl is typically methyl, ethyl, n-propyl, isopropyl, n-butyl, sec.-butyl, isobutyl, tert.-butyl, n-pentyl, 2-pentyl, 3-pentyl, 2,2-dimethyl-propyl, n-hexyl, n-heptyl, n-octyl, 1,1,3,3-tetramethylbutyl and 2-ethylhexyl. C₁-C₄alkyl is typically methyl, ethyl, n-propyl, isopropyl, n-butyl, sec.-butyl, isobutyl, tert.-butyl.

C₂-C₁₂alkenyl (C₂-C₅alkenyl) groups are straight-chain or branched alkenyl groups, such as e.g. vinyl, allyl, methallyl, isopropenyl, 2-butenyl, 3-butenyl, isobutenyl, n-penta-2,4-dienyl, 3-methyl-but-2-enyl, n-oct-2-enyl, or n-dodec-2-enyl.

C₁-C₁₂alkoxy groups (C₁-C₈alkoxy groups) are straight-chain or branched alkoxy groups, e.g. methoxy, ethoxy, n-propoxy, isopropoxy, n-butoxy, sec-butoxy, tert-butoxy, amyloxy, isoamyloxy or tert-amyloxy, heptyloxy, octyloxy, isooctyloxy, nonyloxy, decyloxy, undecyloxy and dodecyloxy.

C₁-C₁₂alkylthio groups (C₁-C₈ alkylthio groups) are straight-chain or branched alkylthio groups and have the same preferences as the akoxy groups, except that oxygen is exchanged against sulfur.

C₁-C₁₂alkylene is bivalent C₁-C₁₂alkyl, i.e. alkyl having two (instead of one) free valencies, e.g. trimethylene or tetramethylene.

A cycloalkyl group is typically C₃-C₈cycloalkyl, such as, for example, cyclopentyl, cyclohexyl, cycloheptyl, or cyclooctyl, which may be unsubstituted or substituted.

In several cases it is advantageous in addition to the photoinitiator to employ a sensitizer compound. Examples of suitable sensitizer compounds are disclosed in WO 06/008251, page 36, line 30 to page 38, line 8, the disclosure of which is hereby incorporated by reference. As sensitizer inter alia benzophenone compounds as described above can be employed.

The lamp used in the method and apparatus of the present invention has emission peak(s) in the UV-A range (400 nm to 320 nm) and short wavelength visible spectrum (400-450 nm). That is, the lamp has emission peak(s) in the range of from 320 to 450 nm.

UV radiation is generally classed as UV-A, UV-B, and UV-C as follows: UV-A: 400 nm to 320 nm UV-B: 320 nm to 290 nm UV-C: 290 nm to 100 nm.

When a transparent substrate is used, the type of lamp is generally not critical. For example high or medium pressure mercury lamps are sufficient.

Any ultraviolet light source may be employed as a radiation source, such as, a high or low pressure mercury lamp, a cold cathode tube, a black light, an ultraviolet LED, an ultraviolet laser, and a flash light.

Examples of lamps, which can be used in the process of the present invention are shown below:
- Medium pressure mercury arcs are modified by the inclusion of metal halides in small proportions to vary the spectral output:
   - iron doped - spectral output shifted to 350-450nm;
   - gallium doped - emits very little UV; emission in the violet and blue spectral regions (expected additional UV lines by doping a mercury arc with metal iodides at wavelength/nm: Gallium (Ga) 403, 417 and Iron (Fe) 358, 372, 374/5, 382, 386, 388); and
- Focussed Reflected Diode Array (FRDA) systems (igb-tech GmbH), such as for example FRDA 202 having an emission peak around 400 nm. Multi-spectrum lamps can also be used.

Advantageously, a gallium, or iron doped medium pressure mercury arc is used in the method and apparatus of the present invention to produce more efficiently UV-A (315 - 400 nm) or UV-B (280 - 315 nm) and to provide better radiant efficiency ranges and higher curing.

Each irradiator consists of an aluminum housing containing a linear reflector with an elliptical (or, depending on application, parabolic) cross section. The reflector attached to the irradiator housing is made from a special aluminum which has a high degree of UV reflectivity and a resistance to tarnishing and corrosion.

The photoinitiator(s), or photoinitiator mixture and the lamp used should be optimised in dependence of the particular substrate type in order to achieve optimal printing speed.

The forming of an optically variable image on the substrate comprises depositing a curable composition on at least a portion of the substrate. The composition, generally a coating an ink or lacquer may be deposited by means of gravure, flexographic, ink jet, offset and screen process printing as well as by coating processes. In lab scale experiments draw-downs with a wire bar or with a doctor blade are convenient.

Depending on the amount of solvent in the lacquer and depending on the printing process different dry coating thicknesses result. The weight ratio of silver nano pigment to binder influences the resulting colors in transmittance and reflectance. Theoretically a pigment binder ratio as given below leads to the outlined dry coating thickness.

| | | | | |
|---|---|---|---|---|
| P: B ratio | 5:1 | 1:3 | 1:100 | 1:1000 |

A coating thickness of between 0.2 and 4 micron is typical for the instant method.

Typically the silver nano pigment to binder weight ratio is from 5:1 to 1:1000.

The curable lacquer is cured by ultraviolet (U.V.) light. UV curing lacquers are commercial products and can be obtained, for example, from BASF SE. The lacquers exposed to actinic radiations used in the present invention are required to reach a solidified stage when they separate again from the imaging shim in order to keep the record in their upper layer of the sub-microscopic, holographic diffraction grating image or pattern (OVI). Particularly suitable for the lacquers compositions are chemistries used in the radiation curable industries in industrial coatings and graphic arts. Particularly suitable are compositions containing one or several photo-latent catalysts that will initiate polymerization of the exposed lacquer layer to UV radiation. Particularly suitable for fast curing and conversion to a solid state are compositions comprising one or several monomers and oligomers sensitive to free-radical polymerization, such as acrylates, methacrylates or monomers or/and oligomers, containing at least one ethylenically unsaturated group.
The unsaturated compounds may include one or more olefinic double bonds. They may be of low (monomeric) or high (oligomeric) molecular mass. Examples of monomers containing a double bond are alkyl, hydroxyalkyl or amino acrylates, or alkyl, hydroxyalkyl or amino methacrylates, for example methyl, ethyl, butyl, 2-ethylhexyl or 2-hydroxyethyl acrylate, isobornyl acrylate, methyl methacrylate or ethyl methacrylate. Silicone acrylates are also advantageous. Other examples are acrylonitrile, acrylamide, methacrylamide, N-substituted (meth)acrylamides, vinyl esters such as vinyl acetate, vinyl ethers such as isobutyl vinyl ether, styrene, alkyl- and halostyrenes, N-vinylpyrrolidone, vinyl chloride or vinylidene chloride.
Examples of monomers containing two or more double bonds are the diacrylates of ethylene glycol, propylene glycol, neopentyl glycol, hexamethylene glycol or of bisphenol A, and 4,4'-bis(2-acryl-oyloxyethoxy)diphenylpropane, trimethylolpropane triacrylate, pentaerythritol triacrylate or tetraacrylate, vinyl acrylate, divinylbenzene, divinyl succinate, diallyl phthalate, triallyl phosphate, triallyl isocyanurate or tris(2-acryloylethyl) isocyanurate. Examples of polyunsaturated compounds of relatively high molecular mass (oligomers) are acrylated epoxy resins, polyesters containing acrylate-, vinyl ether- or epoxy-groups, and also polyurethanes and polyethers. Further examples of unsaturated oligomers are unsaturated polyester resins, which are usually prepared from maleic acid, phthalic acid and one or more diols and have molecular weights of from about 500 to 3000. In addition it is also possible to employ vinyl ether monomers and oligomers, and also maleate-terminated oligomers with polyester, polyurethane, polyether, polyvinyl ether and epoxy main chains. Of particular suitability are combinations of oligomers which carry vinyl ether groups and of polymers as described in WO90/01512. However, copolymers of vinyl ether and maleic acid-functionalized monomers are also suitable. Unsaturated oligomers of this kind can also be referred to as prepolymers.

Particularly suitable examples are esters of ethylenically unsaturated carboxylic acids and polyols or polyepoxides, and polymers having ethylenically unsaturated groups in the chain or in side groups, for example unsaturated polyesters, polyamides and polyurethanes and copolymers thereof, polymers and copolymers containing (meth)acrylic groups in side chains, and also mixtures of one or more such polymers.
Examples of unsaturated carboxylic acids are acrylic acid, methacrylic acid, crotonic acid, itaconic acid, cinnamic acid, and unsaturated fatty acids such as linolenic acid or oleic acid. Acrylic and methacrylic acid are preferred.
Suitable polyols are aromatic and, in particular, aliphatic and cycloaliphatic polyols. Examples of aromatic polyols are hydroquinone, 4,4'-dihydroxydiphenyl, 2,2-di(4-hydroxyphenyl)propane, and also novolaks and resols. Examples of polyepoxides are those based on the abovementioned polyols, especially the aromatic polyols, and epichlorohydrin. Other suitable polyols are polymers and copolymers containing hydroxyl groups in the polymer chain or in side groups, examples being polyvinyl alcohol and copolymers thereof or polyhydroxyalkyl methacrylates or copolymers thereof. Further polyols which are suitable are oligoesters having hydroxyl end groups.
Examples of aliphatic and cycloaliphatic polyols are alkylenediols having preferably 2 to 12 C atoms, such as ethylene glycol, 1,2- or 1,3-propanediol, 1,2-, 1,3- or 1,4-butanediol, pentanediol, hexanediol, octanediol, dodecanediol, diethylene glycol, triethylene glcyol, polyethylene glycols having molecular weights of preferably from 200 to 1500, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols may be partially or completely esterified with one carboxylic acid or with different unsaturated carboxylic acids, and in partial esters the free hydroxyl groups may be modified, for example etherified or esterified with other carboxylic acids.
Examples of esters are: trimethylolpropane triacrylate, trimethylolethane triacrylate, trimethylolpropane trimethacrylate, trimethylolethane trimethacrylate, tetramethylene glycol dimethacrylate, triethylene glycol dimethacrylate, tetraethylene glycol diacrylate, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol pentaacrylate, dipentaerythritol hexaacrylate, tripentaerythritol octaacrylate, pentaerythritol dimethacrylate, pentaerythritol trimethacrylate, dipentaerythritol dimethacrylate, dipentaerythritol tetramethacrylate, tripentaerythritol octamethacrylate, pentaerythritol diitaconate, dipentaerythritol tris-itaconate, dipentaerythritol pentaitaconate, dipentaerythritol hexaitaconate, ethylene glycol diacrylate, 1,3-butanediol diacrylate, 1,3-butanediol dimethacrylate, 1,4-butanediol diitaconate, sorbitol triacrylate, sorbitol tetraacrylate, pentaerythritol-modified triacrylate, sorbitol tetra methacrylate, sorbitol pentaacrylate, sorbitol hexaacrylate, oligoester acrylates and methacrylates, glycerol diacrylate and triacrylate, 1,4-cyclohexane diacrylate, bisacrylates and bismethacrylates of polyethylene glycol with a molecular weight of from 200 to 1500, or mixtures thereof.

Also suitable as polymerizable components are the amides of identical or different, unsaturated carboxylic acids with aromatic, cycloaliphatic and aliphatic polyamines having preferably 2 to 6, especially 2 to 4, amino groups. Examples of such polyamines are ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diaminocyclohexane, isophoronediamine, phenylenediamine, bisphenylenediamine, di-β-aminoethyl ether, diethylenetriamine, triethylenetetramine, di(β-aminoethoxy)- or di(β-aminopropoxy)ethane. Other suitable polyamines are polymers and copolymers, preferably with additional amino groups in the side chain, and oligoamides having amino end groups. Examples of such unsaturated amides are methylenebisacrylamide, 1,6-hexamethylenebisacrylamide, diethylenetriaminetrismethacrylamide, bis(methacrylamido-propoxy)ethane, methacrylamidoethyl methacrylate and N[(β-hydroxy-ethoxy)ethyl]acrylamide.

Suitable unsaturated polyesters and polyamides are derived, for example, from maleic acid and from diols or diamines. Some of the maleic acid can be replaced by other dicarboxylic acids. They can be used together with ethylenically unsaturated comonomers, for example styrene. The polyesters and polyamides may also be derived from dicarboxylic acids and from ethylenically unsaturated diols or diamines, especially from those with relatively long chains of, for example 6 to 20 C atoms. Examples of polyurethanes are those composed of saturated or unsaturated diisocyanates and of unsaturated or, respectively, saturated diols.

Polymers with (meth)acrylate groups in the side chain are likewise known. They may, for example, be reaction products of epoxy resins based on novolaks with (meth)acrylic acid, or may be homo- or copolymers of vinyl alcohol or hydroxyalkyl derivatives thereof which are esterified with (meth)acrylic acid, or may be homo- and copolymers of (meth)acrylates which are esterified with hydroxyalkyl (meth)acrylates.
Other suitable polymers with acrylate or methacrylate groups in the side chains are, for example, solvent soluble or alkaline soluble polyimide precursors, for example poly(amic acid ester) compounds, having the photopolymerizable side groups either attached to the backbone or to the ester groups in the molecule, i.e. according to EP624826. Such oligomers or polymers can be formulated with optionally reactive diluents, like polyfunctional (meth)acrylates in order to prepare highly sensitive polyimide precursors.

Examples of polymerizable components are also polymers or oligomers having at least two ethylenically unsaturated groups and at least one carboxyl function within the molecule structure, such as a resin obtained by the reaction of a saturated or unsaturated polybasic acid anhy-dride with a product of the reaction of an epoxy compound and an unsaturated monocarboxylic acid, for example, photosensitive compounds as described in JP 10-301276 and commercial products such as for example EB9696, UCB Chemicals; KAYAR-AD TCR1025, Nippon Kayaku Co.,LTD., NK OLIGO EA-6340, EA-7440 from Shin-Nakamura Chemical Co.,Ltd., or an addition product formed between a carboxyl group-containing resin and an unsaturated compound having an α,β-unsaturated double bond and an epoxy group (for example, ACA200M, Daicel Industries, Ltd.). Additional commercial products as examples of polymerizable component are ACA200, ACA210P, ACA230AA, ACA250, ACA300, ACA320 from Daicel Chemical Industries, Ltd.

The photopolymerizable compounds are used alone or in any desired mixtures. It is preferred to use mixtures of polyol (meth)acrylates. A preferred composition comprises at least one compound having at least one free carboxylic group.

As diluent, a mono- or multi-functional ethylenically unsaturated compound, or mixtures of several of said compounds, can be included in the above composition up to 70 % by weight based on the solid portion of the composition.
The invention also provides compositions comprising as polymerizable component at least one ethylenically unsaturated photopolymerizable compound which is emulsified or dissolved in water, or organic solvents.
The unsaturated polymerizable components can also be used in admixture with non-photopolymerizable, film-forming components. These may, for example, be physically drying polymers or solutions thereof in organic solvents, for instance nitrocellulose or cellulose acetobutyrate. They may also, however, be chemically and/or thermally curable (heat-curable) resins, examples being polyisocyanates, polyepoxides and melamine resins, as well as polyimide precursors. The use of heat-curable resins at the same time is important for use in systems known as hybrid systems, which in a first stage are photopolymerized and in a second stage are crosslinked by means of thermal aftertreatment.

The polymerizable compositions may additionally comprise a solvent. The solvent may be ester/alcohol blends and preferably normal propyl acetate and ethanol. More preferably, the ester/alcohol blend is in a ratio of between 10: 1 and 40: 1, even more preferably 20: 1 to 30: 1. The solvent used may comprise any one or more of an ester, such as n-propyl acetate, iso-propyl acetate, ethyl acetate, butyl acetate; an alcohol, such as ethyl alcohol, industrial methylated spirits, isopropyl alcohol or normal propyl alcohol; a ketone, such as methyl ethyl ketone or acetone; an aromatic hydrocarbon, such as toluene, and water.

Although water may be used as a diluent alone, it is used in most cases together with an organic solvent such as an alcohol.

A photoinitiator, or a mixture of photoinitiators is incorporated into the formulation / composition to initiate the UV-curing process.

In a specific embodiment the curable composition comprises
(a) 5.0 to 0.6, especially 5.0 to 1.0, very especially 4.0 to 2.5 % by weight of photoinitiator,
(b) 94.9 to 11.9, especially 94.1 to 19.0, very especially 76.0 to 47.5 % by weight of one or more ethylenically unsaturated resins, monomers or mixtures thereof,
(c) 0.1 to 87.5, especially 1.0 to 80.0, very especially 20.0 to 50.0% by weight of the metal pigment which is in the form of platelet shaped transition metal particles as defined above wherein the sum of components a) to c) adds up to 100%.

In general the photoinitiator is typically added in an amount of 1% to 20%, preferably 3% to 10% by weight, based on the weight of the total curable composition.

The curable composition may comprise various additives. Examples thereof include thermal inhibitors, light stabilisers, optical brighteners, fillers and pigments, as well as white and coloured pigments, dyes, antistatics, adhesion promoters, wetting agents, flow auxiliaries, lubricants, waxes, anti-adhesive agents, dispersants, emulsifiers, anti-oxidants; fillers, e.g. talcum, gypsum, silicic acid, rutile, carbon black, zinc oxide, iron oxides; reaction accelerators, thickeners, matting agents, antifoams, leveling agents and other adjuvants customary, for example, in lacquer, ink and coating technology.

The UV lacquer may comprise an epoxy-acrylate from the CRAYNOR® Sartomer Europe range, or the LAROMER® range available from BASF SE (10 to 60%) and one or several acrylates (monofunctional and multifunctional), monomers which are available from Sartomer Europe, or BASF SE (20 to 90%) and one, or several photoinitiators (1 to 15%) such as Irgacure® 819 (BASF SE) and a levelling agent such as BYK®361 (0.01 to 1%) from BYK Chemie.

In a further embodiment of the present invention the ultraviolet coating can be coloured. That is the curable composition may comprise pigments and/or dyes. The pigments can be transparent organic color pigments or inorganic pigments.

Suitable colored pigments especially include organic pigments selected from the group consisting of azo, azomethine, methine, anthraquinone, phthalocyanine, perinone, perylene, diketopyrrolopyrrole, thioindigo, dioxazine iminoisoindoline, dioxazine, iminoisoindolinone, quinacridone, flavanthrone, indanthrone, anthrapyrimidine and quinophthalone pigments, or a mixture or solid solution thereof; especially a dioxazine, diketopyrrolopyrrole, quinacridone, phthalocyanine, indanthrone or iminoisoindolinone pigment, or a mixture or solid solution thereof.

Colored organic pigments of particular interest include C.I. Pigment Red 202, C.I. Pigment Red 122, C.I. Pigment Red 179, C.I. Pigment Red 170, C.I. Pigment Red 144, C.I. Pigment Red 177, C.I. Pigment Red 254, C.I. Pigment Red 255, C.I. Pigment Red 264, C.I. Pigment Brown 23, C.I. Pigment Yellow 109, C.I. Pigment Yellow 110, C.I. Pigment Yellow 147, C.I. Pigment Orange 61, C.I. Pigment Orange 71, C.I. Pigment Orange 73, C.I. Pigment Orange 48, C.I. Pigment Orange 49, C.I. Pigment Blue 15, C.I. Pigment Blue 60, C.I. Pigment Violet 23, C.I. Pigment Violet 37, C.I. Pigment Violet 19, C.I. Pigment Green 7, C.I. Pigment Green 36, the 2,9-dichloro-quinacridone in platelet form described in WO08/055807, or a mixture or solid solution thereof.

Platelet like organic pigments, such as platelet like quinacridones, phthalocyanine, fluororubine, dioxazines, red perylenes or diketopyrrolopyrroles can advantageously be used as further component.

Suitable colored pigments also include conventional inorganic pigments; especially those selected from the group consisting of metal oxides, antimony yellow, lead chromate, lead chromate sulfate, lead molybdate, ultramarine blue, cobalt blue, manganese blue, chrome oxide green, hydrated chrome oxide green, cobalt green and metal sulfides, such as cerium or cadmium sulfide, cadmium sulfoselenides, zinc ferrite, bismuth vanadate, Prussian blue, Fe₃O₄, carbon black and mixed metal oxides. Examples of commercially available inorganic pigments are BAYFERROX® 3920, BAYFERROX® 920, BAYFERROX® 645T, BAYFERROX®303T, BAYFERROX® 110, BAYFERROX® 110 M, CHROMOXIDGRUEN GN, and CHROMOXIDGRUEN GN-M.

Examples of dyes, which can be used to color the curable composition, are selected from the group consisting of azo, azomethine, methine, anthraquinone, phthalocyanine, dioxazine, flavanthrone, indanthrone, anthrapyrimidine and metal complex dyes. Monoazo dyes, cobalt complex dyes, chrome complex dyes, anthraquinone dyes and copper phthalocyanine dyes are preferred.

According to an additional aspect of the invention nano- and micro-structures are capable of being printed using conventional printing methods, thus enabling printing at high speeds, at required widths, and in register with any conventional printing on the document or label being printed.

Optical microstructured images are composed of a series of structured surfaces (surface relief microstructures). These surfaces may have straight or curved profiles, with constant or random spacing, and may even vary from nanometers to millimetres in dimension. Patterns may be circular, linear, or have no uniform pattern. Embossed patterns may comprise microstructures having dimensions in the range from about 0.01 microns to about 100 microns. Light interference patterns based on microstructures having dimensions in the range from about 0.1 microns to about 10 microns, preferably about 0.1 microns to about 1 microns. For example a Fresnel lens has a microstructured surface on one side and a planar surface on the other. The microstructured surface consists of a series of grooves with changing slope angles as the distance from the optical axis increases. The draft facets located between the slope facets usually do not affect the optical performance of the Fresnel lens.

The optical interference pattern can take various conventional forms including diffraction patterns such as diffraction gratings, refraction patterns, holographic patterns such as two-dimensional and three-dimensional holographic images, corner cube reflectors, Kinegram® devices (i.e., holograms with changing imagery as the angel of view is changed), Pixelgram® devices (i.e., a hologram with multiple holographic pixels arranged in a spatial orientation that generates one holographic image), zero order diffraction patterns, moire patterns, or other light interference patterns based on microstructures having dimensions in the range from about 0.1 microns to about 10 microns, preferably about 0.1 microns to about 1 microns, and various combinations of the above such as hologram/grating images, or other like interference patterns.

Such structures include, but are not limited to: (1) electron beam generated holograms; (2) dot matrix holograms; (3) computer generated holograms; (4) optically variable devices (OVDs); (5) diffractive optical variable devices (DOVIDs); (6) lenses, in particular micro lenses; (7) lenticular lenses; (8) non-reflective structures; (9) light management structures; (10) deep structures (e.g., structures that diffract only one wavelength at a very wide viewing angle, such as found in some butterflies and other insects); (11) radio frequency identification (RFID) antennas; (12) embossable computer chips; (13) retroreflective structures; (14) metallic-looking structures; ROVIDs (reflective optical variable devices).

The optically variable device (OVD) is, for example, a diffractive optical variable image (DOVI). The term "diffractive optical variable image" as used herein may refer to any type of holograms including, for example, but not limited to a multiple plane hologram (e.g., 2-dimensional hologram, 3-dimensional hologram, etc.), a stereogram, and a grating image (e.g., dot-matrix, pixelgram, exelgram, kinegram, etc.).

Typically the metal in the curable composition is selected from the group consisting of Cu, Ag, Au, Zn, Cd, Ti, Cr, Mn, Fe, Co, Ni, Ru, Rh, Pd, Os, Ir and Pt, preferably Ag and Cu.

Preferably, the particles comprise, silver and/or copper flakes.

Especially preferred is Ag.

The shaped transition metal particles have, for example, a longest dimension of edge length of from 5 to 1000 nm and a thickness of 1 to 100 nm and comprise hexagonal and/or triangular and/or truncated triangular prisms, which prisms make up more than 20% of the total number of shaped transition metal particles.

In a specific embodiment of the present invention, platelet shaped transition metal particles having a longest dimension of edge length of from 15 nm to 1000 nm, preferably from 15 nm to 600 nm and particularly from 20 nm to 500 nm, and a thickness of from 2 nm to 100 nm, preferably from 2 to 40 nm and particularly from 4 to 30 nm are used. The production of the shaped transition metal particles is, for example, described in US2008/0295646, WO2004/089813, WO2006/099312, C. Xue et al., Adv. Mater. 19, 2007, 4071, WO2009056401 and WO2010/108837. The use of the platelet shaped transition metal particles for producing holograms is described in WO 2011/064162.

The curable compositions comprise a total content of shaped transition metal particles of from 0.1 to 90 % by weight, preferably 1-20% by weight based on the total weight of the ink. The curable composition may additionally comprise a solvent. Typical solvents have already been mentioned. For example, the solvents may be ester/alcohol blends and preferably normal propyl acetate and ethanol. More preferably, the ester/alcohol blend is in a ratio of between 10: 1 and 40: 1, even more preferably 20: 1 to 30: 1. The solvent used in the curable composition may comprise any one or more of an ester, such as n-propyl acetate, iso-propyl acetate, ethyl acetate, butyl acetate; an alcohol, such as ethyl alcohol, methanol, methoxypropanol, industrial methylated spirits, isopropyl alcohol or normal propyl alcohol; a ketone, such as cyclohexanone, methyl ethyl ketone or acetone; an aromatic hydrocarbon, such as toluene, and water.

The platelet shaped (transition) metal particles may be used in combination with spherical (transition) metal particles, such as spherical (transition) metal particles having a diameter of ≤ 40 nm, especially ≤ 20 nm.

In another embodiment of the invention another metal pigment may be added. The metal pigment is a metal pigment produced by physical vapor deposition (PVD metal pigment). The operating range of vacuum deposition may be in the range of 5 to 50 nm, the preferred thickness of the metal particles is in the range of 8 to 21 nm. Preferably, the thickness of the metal pigment particles is less than 50 nm. More preferably, the thickness of metal pigment particle is less than 35 nm. More preferably still, the thickness of pigment particle is less than 20 nm. Even more preferably still, the thickness of pigment particle is in the range 5-18 nm.

If such metallic pigment mixtures are used the ratio between the metallic platelet pigment and the binder system is from 10:1 to 1:1000.

The transparent or translucent substrate is selected from paper or from a thermoplastic or crosslinked polymer.

With respect to the thermoplastic or crosslinked polymer, a thermoplastic resin may be used, examples of which include, polyethylene based polymers [polyethylene (PE), ethylene-vinyl acetate copolymer (EVA), vinyl chloride-vinyl acetate copolymer, vinyl alcohol-vinyl acetate copolymer, polypropylene (PP), vinyl based polymers [poly(vinyl chloride) (PVC), poly(vinyl butyral) (PVB), poly(vinyl alcohol) (PVA), poly(vinylidene chloride) (PVdC), poly(vinyl acetate) (PVAc), poly(vinyl formal) (PVF)], polystyrene based polymers [polystyrene (PS), styrene-acrylonitrile copolymer (AS), acrylonitrile-butadiene-styrene copolymer (ABS)], acrylic based polymers [poly(methyl methacrylate) (PMMA), MMA-styrene copolymer], polycarbonate (PC), celluloses [ethyl cellulose (EC),cellulose acetate (CA), propyl cellulose (CP), cellulose acetate butyrate (CAB), cellulose nitrate (CN)], fluorin based polymers [polychlorofluoroethylene (PCTFE), polytetrafluoroethylene (PTFE), tetrafluoroethylene-hexafluoroethylene copolymer (FEP), poly(vinylidene fluoride) (PVdF)], urethane based polymers (PU), nylons [type 6, type 66, type 610, type 11], polyesters (alkyl) [polyethylene terephthalate (PET), polybutylene terephthalate (PBT), polycyclohexane terephthalate (PCT)], novolac type phenolic resins, or the like. In addition, thermosetting resins (crosslinked resins) such as resol type phenolic resin, a urea resin, a melamine resin, a polyurethane resin, an epoxy resin, an unsaturated polyester and the like.

The paper substrate may be a banknote, an identification document like a passport, an identification card, a driver's license, a packaging material, e.g. a label, folding carton, paper bag for pharmaceuticals, apparel, software, cosmetic, tobacco or any other product to be decorated or prone to counterfeiting or forgery.

In a specific embodiment of the invention the paper or board has been treated with a cationic polymer on the frontside before applying a curable composition (varnish) to at least a portion of the frontside of the paper substrate.

Treating in the context of the instant invention comprises all suitable means for applying the polymer solution to the surface of the paper substrate; in particular printing or coating.

The cationic polymers utilized in the present invention for treating the paper include repeating amine units that are capable of forming cationic amine salts. The amine group-containing cationic polymer may be a homopolymer or a copolymer. The homopolymer or copolymer may be either in the base form, or partially, or wholly, in the cationic amine salt form. Such cationic polymers are, for example, described in US 2008/0318150 on page 3 to 4.

Preferably the cationic polymer is a polyvinylamine, which is preferably hydrolysed to at least 90 %.

Polyvinylamine or partally or fully hydrolysed polyvinylformamide are obtainable by polymerisation of N-vinylformamide and subsequent hydrolysis and elimination of the formyl groups to obtain amine groups. The degree of hydrolysis may range from 1% to 100%, preferably ≥ 50% and more preferably ≥ 90%. Particularly preferred is a fully hydrolysed poylvinylformamide.
The preparation of N-vinylformamide polymers and the subsequent hydrolysis is, for example, extensively described in US 6,132,558, col. 2, line 36 to col. 5, line 25. Polyvinylamine and partially or fully hydrolysed polyvinylformamide are commercially available under the trade names Catiofast® und Polymin® from BASF SE.

For example the average molecular weight of these polymers M_{w} is from 20 000 to 2 000 000 g/mol, for instance from 50 000 to 1000 000, in particular from 100 000 to 500 000 g/mol.

For example the polyvinylamine contains 0.1 to 22 milliequivalent (meq), for instance 5 bis 18 meq cationic groups per gramm polyvinylamine. The polyvinylamine polymers are typically in the form of a dispersion or solution, for example with a solid content from 10% to 40%, for instance from 15% to 30% and preferably from 20% to 25%. They are usually applied to the paper or board from such solutions or dispersions.

The amount applied of the above mentioned polymer solution is, for example 2 to 20 g, for instance 2 to 15 g and preferably 4 to 12 g per m² paper substrate. The polymer solution is subsequently dried by means of an infra-red dryer and/or a hot air dryer.
It is also possible to apply together with the cationic polymer further natural polymers such as starch, in particular amylopectine. The amount admixed to the cationic polymer is typically from 5% to 50% based on the weight of the cationic polymer.

Preferably the transparent or translucent substrate is selected from polyester, polyvinyl chloride (PVC), polyethylene, polycarbonate, polypropylene or polystyrene.

For example the surface relief microstructure forming means is a shim which is selected from the group consisting of a nickel sleeve; a nickel plate; an etched, or laser imaged metallic drum, or other materials mounted on an opaque cylinder or metal cylinder containing the optical variable device (OVD image) on the surface.

In many cases it is also possible to use a shim which is made from a thermoplastic or duroplastic polymer.

Preferably the shim is a nickel plate mounted on an opaque cylinder or metal cylinder and containing the OVD image on the surface.

The method outlined above can also be applied over already existing security elements, such as holograms. For example when a transparent or translucent substrate already contains a security element, this security element may be overprinted using the method of the instant invention. The result is, that depending from which side the security elements are looked at, the one or the other is visible which provides an additional step for the prevention of counterfeit or reproduction. This embodiment of the invention is illustrated in example 4.

Another aspect of the invention is a security product obtainable by using the method as defined in claim 15.

The resulting security product containing the surface relief microstructure may for example be overprinted by a clear or slightly colored coating. The surface relief microstructure remains still visible. The coating may be a conventional solvent borne coating or a UV curable coating. Examples for the components of a UV curable coating have already been given above. Examples for binders of solvent borne coatings are nitrocellulose, alkyd resins or polyacrylate resins. In the case of solvent borne coatings an additional heat drying step becomes necessary to evaporate the solvent.

Preferably the security product includes banknotes, credit cards, identification documents like passports, identification cards, driver's licenses, or other verification documents, pharmaceutical apparel, software, compact discs, tobacco packaging and other products or packaging prone to counterfeiting or forgery.

A preferred embodiment is a method for forming a coating showing an angle dependent color change as defined in claim 17.

The coating shows an angle dependent color change, i.e. a variation of color as a function of the viewing angle. An angle dependent color change can be obtained at a pigment/binder ratio of about 10:1 to about 1:100. The colors produced depend on the pigment/binder ratio. The colors vary from violet to blue in transmission to silver to gold in reflection. Other colors can be observed under angles between.

Preferably the coating is deposited by gravure printing.

The following examples illustrate the invention.

### Preparation of silver platelets

The preparation is carried out according to example 1 of WO 2011/064162. The precipitate is dispersed in any solvent of choice, and includes water, methanol, ethylacetate, cyclohexanone, methoxypropanol to obtain a dispersion containing 20% of silver platelets.

The thus obtained platelets are used in the following application examples.

### Application Examples

### Photopolymer materials:

Lumogen® OVD Primer 301 is a commercial UV curable product of BASF SE.

Irgacure® 2100 is a commercial photoinitiator of BASF SE.

Manufacture of a volume hologram, (reflexion hologram) is carried out according to WO2005/124456 Example 1, page 22 or on a film from Bayer, Bayfol HX® or Dupont, Omnidex®, Toppan, DNP

The composition of the UV lacquer is shown below:

| **UV lacquer** | **% by weight** |
|---|---|
| Tripropylene glycol diacrylate (TPGDA) | 1 - 25 |
| Dipropylene glycol diacrylate (DPGDA) | 30 - 45 |
| Ethoxylated trimethylol propane triacrylate (TMEOPTA) | 10 - 50 |
| Reactive tertiary amine | 1 - 15 |
| Photoinitiator blend | 5 - 9 |

### Photoinitiator blend

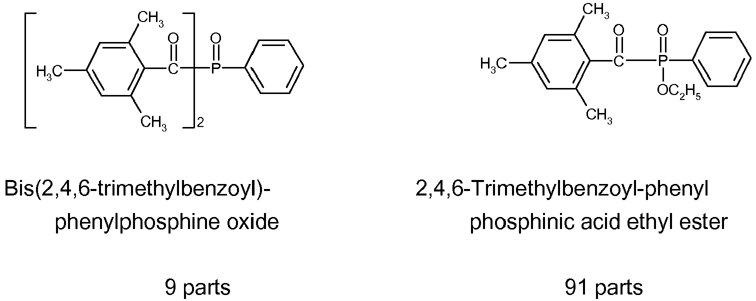

### Example 1 in UV inks

UV ink preparation: 1g UV varnish (Lumogen® OVD Primer 301 +5% Irgacure® 2100) are added to 20g silver platelets dispersion (20% pigment in methanol) in a 50mL glass bottle and gently stirred at room temperature. The obtained ink is coated by the means of a wire bar 0 (4 micron wet ink thickness) on PET film and air dried. The coated film is pressed against a shim containing the holographic structure and is cured under UV light (Aktiprint® 18/2, 80W/cm, 10 m/min) through the film. The PET film is peeled off the shim. The pigment to binder ratio of the ink corresponds to 4:1.

The color coordinates of the film are measured on the embossed surface in reflexion and in transmission using a Colorimeter Konica Minolta CM3610-d-(Measurement-d8° geometry)

| CIELab | L* | C* | h° |
|---|---|---|---|
| Reflexion over white | 57.9 | 10.7 | 91.7 |
| Reflexion over black | 55.9 | 4.0 | 121.2 |
| Transmission | 40.3 | 5.6 | 276.2 |

**Effect obtained:** Metallic hologram visible on the embossed side of the PET film.

### Example 2 in UV inks

UV ink preparation: 6g UV varnish (Lumogen® OVD Primer 301 +5% Irgacure® 2100) are added to 10g silver platelets dispersion (20% pigment in methanol) in a 20mL glass bottle and gently stirred at room temperature. The obtained ink is coated by the means of a wire bar 0 (4 micron wet ink thickness) on PET film and air dried. The coated film is pressed against a shim containing the holographic structure and cured under UV light (Aktiprint® 18/2, 80W/cm, 10 m/min) through the film. The PET film is peeled off the shim. The pigment to binder ratio of the ink corresponds to 1:3.

The color coordinates of the film are measured on the embossed surface in reflexion and in transmission using a Colorimeter Konica Minolta CM3610-d-(Measurement-d8° geometry)

| CIELab | L* | C* | h° |
|---|---|---|---|
| Reflexion over white | 44.9 | 13.5 | 83.4 |
| Reflexion over black | 46.5 | 20.8 | 86.3 |
| Transmission | 24.0 | 57.0 | 301.9 |

**Effect obtained:** Metallic hologram visible on the embossed side of the PET film.

### Example 3 in UV inks

UV ink preparation: 20g UV varnish (Lumogen OVD Primer 301 +5% Irgacure 2100) are added to 1g silver platelets dispersion (20% pigment in methanol) in a 50mL glass bottle and gently stirred at room temperature. The obtained ink is coated by the means of a wire bar 0 (4 micron wet ink thickness) on PET film and air dried. The coated film is pressed against a shim containing the holographic structure and cured under UV light (Aktiprint 18/2, 80W/cm, 10 m/min) through the film. The PET film is peeled off the shim. The pigment to binder ratio of the ink corresponds to 1:100.The color coordinates of the PET film are measured on the embossed surface in reflexion and in transmission using a Colorimeter Konica Minolta CM3610-d- (Measurement-d8° geometry)

| CIELab | L* | C* | h° |
|---|---|---|---|
| Reflexion over white | 69.6 | 17.6 | 254.4 |
| Reflexion over black | 40.5 | 3.2 | 355.5 |
| Transmission | 89.8 | 10.2 | 249.1 |

**Effect obtained:** Metallic hologram visible on two sides of the PET film.

### Example 4 in UV inks

UV ink in example 2 is coated by the means of a wire bar 0 (4 micron coating) on a UV casted hologram image A on PET , it is air dried and is subsequently pressed against a shim containing a holographic image B. It is cured under UV light (Aktiprint® 18/2, 80W/cm, 10 m/min) through the film. The PET film is peeled off the shim.

The color coordinates of the film are measured on the embossed surface in reflexion and in transmission using a Colorimeter Konica Minolta CM3610-d-(Measurement-d8° geometry)

| CIELab | L* | C* | h° |
|---|---|---|---|
| Reflexion over white | 53.7 | 19.6 | 119.4 |
| Transmission | 13.2 | 15.1 | 283.9 |

### Effect obtained:

Metallic hologram image A and image B visible on each side of the PET film, blue color in transmission.

### Example 5 in waterborne UV inks

UV ink preparation: 5g UV varnish (Lumogen® OVD Primer 301 +5% Irgacure® 2100) mixed with 2g distilled water are added to 20g silver platelets (25% pigment in water) in a 50mL glass bottle and gently stirred at room temperature.

The obtained ink is coated by the means of a wire bar 0 (4 micron wet ink thickness) on PET film and air dried. The coated film is pressed against a shim containing the holographic structure and cured under UV light (Aktiprint® 18/2, 80W/cm,10 m/min) through the film. The PET film is peeled off the shim. The pigment to binder ratio of the ink corresponds to 1:1.

The color coordinates of the film are measured on the embossed surface in reflexion and in transmission using a Colorimeter Konica Minolta CM3610-d-(Measurement-d8° geometry)

| CIELab | L* | C* | h° |
|---|---|---|---|
| Reflexion over white | 38.1 | 5.5 | 19.6 |
| Transmission | 23.2 | 57.6 | 289.7 |

**Effect obtained:** Metallic hologram visible on the embossed side of the PET film.

**Conclusion:** The UV curable compositions of the instant invention provide none-leafing properties which are particularly suitable for coating on holograms or embossing holograms. The extremely small particles are filling the grating of the OVD and give rise to the same reflection (Optical Density 2 or higher) as a vapour metal deposited pigment.

## Claims

1. A method for forming a surface relief microstructure, especially an optically variable image on a substrate comprising the steps of:
A) applying a curable composition to at least a portion of the substrate wherein the curable composition comprises
a1) at least one ethylenically unsaturated resin, a monomer or a mixture thereof;
a2) at least one photoinitiator; and
a3) a metal pigment which is in the form of platelet shaped transition metal particles having a longest dimension of edge length of from 5 nm to 1000 nm, preferably from 7 nm to 600 nm and particularly from 10 nm to 500 nm, and a thickness of from 1 nm to 100 nm, preferably from 2 to 40 nm and particularly from 3 to 30 nm;
B) contacting at least a portion of the curable composition with a surface relief microstructure, especially optically variable image forming means;
C) curing the composition by using at least one UV lamp.

2. A method according to claim 1 for forming a surface relief microstructure, especially an optically variable image on a transparent or translucent substrate comprising the steps of:
A) applying a curable composition to at least a portion of the frontside of the substrate wherein the curable composition comprises
a1) at least one ethylenically unsaturated resin, monomer or mixture thereof;
a2) at least one photoinitiator; and
a3) a metal pigment which is in the form of platelet shaped transition metal particles having a longest dimension of edge length of from 5 nm to 1000 nm, preferably from 7 nm to 600 nm and particularly from 10 nm to 500 nm, and a thickness of from 1 nm to 100 nm, preferably from 2 to 40 nm and particularly from 3 to 30 nm;
B) contacting at least a portion of the curable composition with a surface relief microstructure, especially optically variable image forming means;
C) curing the composition by using at least one UV lamp which is arranged on the backside of the transparent or translucent substrate.

3. The method according to claim 1 or 2, wherein the lamp is a gallium, or iron doped medium pressure mercury lamp.

4. The method according to claim 1, 2 or 3, wherein the photoinitiator is selected from benzophenone, alpha-hydroxy ketone type compounds, alpha-alkoxy ketone type compounds, alpha-amino ketone type compounds, mono and bisacylphosphine oxide compounds, phenylglyoxylate compounds, oxim ester compounds and onium salt compounds (sulfonium salt compounds and iodoinium salt compounds) and mixtures thereof.

5. The method according to claim 4, wherein the photoinitiator is selected from mono and bisacylphosphine oxide compounds and mixtures thereof.

6. The method according to any of claims 1 to 5, wherein the curable composition comprises a mixture of a mono and/or a bisacylphosphine oxide compound with a benzophenone compound, an alpha-hydroxy ketone, alpha-alkoxyketone, or alpha-aminoketone compound.

7. The method according to any of claims 1 to 6, wherein the curable composition comprises
(a) 5.0 to 0.6, especially 5.0 to 1.0, very especially 4.0 to 2.5 % by weight of photoinitiator,
(b) 94.9 to 11.9, especially 94.1 to 19.0, very especially 76.0 to 47.5 % by weight of one or more ethylenically unsaturated resins, monomers or mixtures thereof,
(c) 0.1 to 87.5, especially 1.0 to 80.0, very especially 20.0 to 50.0% by weight of the metal pigment which is in the form of platelet shaped transition metal particles as defined above
wherein the sum of components a) to c) adds up to 100%.

8. The method according to any preceding claim, wherein the metal is selected from the group consisting of Cu, Ag, Au, Zn, Cd, Ti, Cr, Mn, Fe, Co, Ni, Ru, Rh, Pd, Os, Ir and Pt, preferably Ag and Cu, especially Ag.

9. The method according to any preceding claim, wherein the shaped transition metal particles having a longest dimension of edge length of from 5 to 1000 nm and a thickness of 1 to 100 nm and comprising hexagonal and/or triangular and/or truncated triangular prisms, which prisms make up more than 20% of the total number of shaped transition metal particles.

10. The method according to claim 2 to 9 wherein the transparent or translucent substrate is selected from paper or from a thermoplastic or crosslinked polymer.

11. The method according to claim 10 wherein the transparent or translucent substrate is a thermoplastic polymer selected from polyester, polyvinyl chloride (PVC), polyethylene, polycarbonate, polypropylene or polystyrene.

12. The method according to any preceding claim, wherein the surface relief microstructure forming means is a shim which is selected from the group consisting of a nickel sleeve; a nickel plate; an etched, or laser imaged metallic drum, or other materials mounted on an opaque cylinder or metal cylinder containing the optically variable image on the surface.

13. The method according to claim 12, wherein the shim is a nickel plate mounted on an opaque cylinder or metal cylinder and containing the optically variable image on the surface.

14. The method according to any preceding claim wherein the surface relief microstructure, especially an optically variable image is applied over an already existing security element, especially a hologram.

15. A security product containing a surface relief microstructure obtainable according to the method as claimed in claims 1 to 14.

16. The product according to claim 15, which includes banknotes, credit cards, identification documents like passports, identification cards, drivers licenses, or other verification documents, pharmaceutical apparel, software, compact discs, tobacco packaging and other products or packaging prone to counterfeiting or forgery.

17. A method according to claims 1 to 14 for forming a coating showing an angle dependent color change on a substrate.

## Patentansprüche

1. Verfahren zur Herstellung einer Oberflächenrelief-Mikrostruktur, insbesondere eines optisch variablen Bilds, auf einem Substrat, umfassend die Schritte:
A) Aufbringen einer härtbaren Zusammensetzung auf wenigstens einen Teil des Substrats, wobei die härtbare Zusammensetzung umfasst:
a1) wenigstens ein ethylenisch ungesättigtes Harz, ein Monomer oder ein Gemisch davon;
a2) wenigstens einen Photoinitiator; und
a3) ein Metallpigment, das in der Form von plättchenförmigen Übergangsmetallpartikeln vorliegt, die eine längste Abmessung einer Kantenlänge von 5 nm bis 1000 nm, vorzugsweise von 7 nm bis 600 nm und insbesondere von 10 nm bis 500 nm, und eine Dicke von 1 nm bis 100 nm, vorzugsweise von 2 bis 40 nm und insbesondere von 3 bis 30 nm, aufweisen;
B) Inkontaktbringen wenigstens eines Teils der härtbaren Zusammensetzung mit einer Oberflächenrelief-Mikrostruktur, insbesondere einer Vorrichtung zur Herstellung optisch variabler Bilder;
C) Härten der Zusammensetzung unter Verwendung wenigstens einer UV-Lampe.

2. Verfahren gemäß Anspruch 1 zur Herstellung einer Oberflächenrelief-Mikrostruktur, insbesondere eines optisch variablen Bilds, auf einem durchsichtigen oder durchscheinenden Substrat, umfassend die Schritte:
A) Aufbringen einer härtbaren Zusammensetzung auf wenigstens einen Teil der Vorderseite des Substrats, wobei die härtbare Zusammensetzung umfasst:
a1) wenigstens ein ethylenisch ungesättigtes Harz, ein Monomer oder ein Gemisch davon;
a2) wenigstens einen Photoinitiator; und
a3) ein Metallpigment, das in der Form von plättchenförmigen Übergangsmetallpartikeln vorliegt, die eine längste Abmessung einer Kantenlänge von 5 nm bis 1000 nm, vorzugsweise von 7 nm bis 600 nm und insbesondere von 10 nm bis 500 nm, und eine Dicke von 1 nm bis 100 nm, vorzugsweise von 2 bis 40 nm und insbesondere von 3 bis 30 nm, aufweisen;
B) Inkontaktbringen wenigstens eines Teils der härtbaren Zusammensetzung mit einer Oberflächenrelief-Mikrostruktur, insbesondere einer Vorrichtung zur Herstellung optisch variabler Bilder;
C) Härten der Zusammensetzung unter Verwendung wenigstens einer UV-Lampe, die an der Rückseite des durchsichtigen oder durchscheinenden Substrats angeordnet ist.

3. Verfahren gemäß Anspruch 1 oder 2, wobei die Lampe eine gallium- oder eisendotierte Mitteldruck-Quecksilberlampe ist.

4. Verfahren gemäß Anspruch 1, 2 oder 3, wobei der Photoinitiator ausgewählt ist aus Benzophenon, Verbindungen vom alpha-Hydroxyketontyp, Verbindungen vom alpha-Alkoxyketontyp, Verbindungen vom alpha-Aminoketontyp, Mono- und Bisacylphosphinoxidverbindungen, Phenylglyoxylatverbindungen, Oximesterverbindungen und Oniumsalzverbindungen (Sulfoniumsalzverbindungen und Iodoniumsalzverbindungen) und Gemischen davon.

5. Verfahren gemäß Anspruch 4, wobei der Photoinitiator ausgewählt ist aus Mono- und Bisacylphosphinoxidverbindungen und Gemischen davon.

6. Verfahren gemäß einem der Ansprüche 1 bis 5, wobei die härtbare Zusammensetzung ein Gemisch aus einer Mono- und/oder Bisacylphosphinoxidverbindung mit einer Benzophenonverbindung, einer alpha-Hydroxyketon-, alpha-Alkoxyketon- oder alpha-Aminoketonverbindung umfasst.

7. Verfahren gemäß einem der Ansprüche 1 bis 6, wobei die härtbare Zusammensetzung umfasst:
(a) 5,0 bis 0,6, insbesondere 5,0 bis 1,0, besonders 4,0 bis 2,5 Gew.-% Photoinitiator;
(b) 94,9 bis 11,9, insbesondere 94,1 bis 19,0, insbesondere 76,0 bis 47,5 Gew.-% an einem oder mehreren ethylenisch ungesättigten Harzen, Monomeren oder Gemischen davon;
(c) 0,1 bis 87,5, insbesondere 1,0 bis 80,0, besonders 20,0 bis 50,0 Gew.-% an dem Metallpigment, das in der Form von wie vorstehend definierten plättchenförmigen Übergangsmetallpartikeln vorliegt,
wobei die Summe der Komponenten a) bis c) 100 % beträgt.

8. Verfahren gemäß einem der vorstehenden Ansprüche, wobei das Metall ausgewählt ist aus der Gruppe bestehend aus Cu, Ag, Au, Zn, Cd, Ti, Cr, Mn, Fe, Co, Ni, Ru, Rh, Pd, Os, Ir und Pt, vorzugsweise Ag und Cu, insbesondere Ag.

9. Verfahren gemäß einem der vorstehenden Ansprüche, wobei die geformten Übergangsmetallpartikel eine längste Abmessung einer Kantenlänge von 5 nm bis 1000 nm und eine Dicke von 1 nm bis 100 nm aufweisen und hexagonale und/oder dreieckige und/oder abgestumpft dreieckige Prismen umfassen, welche Prismen mehr als 20 % der Gesamtzahl von geformten Übergangsmetallpartikeln darstellen.

10. Verfahren gemäß Anspruch 2 bis 9, wobei das durchsichtige oder durchscheinende Substrat ausgewählt ist aus Papier und einem thermoplastischen oder vernetzten Polymer.

11. Verfahren gemäß Anspruch 10, wobei das durchsichtige oder durchscheinende Substrat ein thermoplastisches Polymer ausgewählt aus Polyester, Polyvinylchlorid (PVC), Polyethylen, Polycarbonat, Polypropylen und Polystyrol ist.

12. Verfahren gemäß einem der vorstehenden Ansprüche, wobei die Vorrichtung zur Herstellung optisch variabler Bilder ein Abstandselement ist, das ausgewählt ist aus der Gruppe bestehend aus einer Nickelhülse; einer Nickelplatte; einer geätzten oder laserbebilderten Metalltrommel, oder anderen Materialien, die auf einen undurchsichtigen Zylinder oder Metallzylinder aufgebracht sind, und das das optisch variable Bild auf der Oberfläche enthält.

13. Verfahren gemäß Anspruch 12, wobei das Abstandselement eine Nickelplatte ist, die auf einem undurchsichtigen Zylinder oder Metallzylinder angebracht ist und das optisch variable Bild auf der Oberfläche enthält.

14. Verfahren gemäß einem der vorstehenden Ansprüche, wobei die Oberflächenrelief-Mikrostruktur, insbesondere ein optisch variables Bild, über einem bereits bestehenden Sicherheitselement, insbesondere einem Hologramm, aufgebracht wird.

15. Sicherheitsprodukt, das eine gemäß dem Verfahren gemäß Ansprüchen 1 bis 14 erhältliche Oberflächenrelief-Mikrostruktur enthält.

16. Produkt gemäß Anspruch 15, einschließlich Banknoten, Kreditkarten, Ausweisdokumente, wie z. B. Reisepässe, Personalausweise, Führerscheine, oder andere Prüfdokumente, pharmazeutische Bekleidungsstücke, Software, Compakt-Discs, Tabakverpackungen und andere Produkte oder Verpackungen, die nachahmungs- oder fälschungsgefährdet sind.

17. Verfahren gemäß Ansprüchen 1 bis 14 zur Herstellung einer Beschichtung, die eine winkelabhängige Farbänderung zeigt, auf einem Substrat.

## Revendications

1. Procédé de formation d'une microstructure à relief superficiel, en particulier d'une image de couleur changeante sur un substrat, comportant les étapes consistant à :
A) appliquer une composition durcissable sur au moins une partie du substrat, la composition durcissable comprenant
a1) au moins une résine à insaturation éthylénique, un monomère ou un mélange de celle-ci ;
a2) au moins un photoinitiateur ; et
a3) au moins un pigment qui a la forme de particules de métal de transition en forme de plaquette possédant une dimension la plus longue de la longueur périphérique de 5 nm à 1 000 nm, de préférence de 7 nm à 600 nm et en particulier de 10 nm à 500 nm, et une épaisseur de 1 nm à 100 nm, de préférence de 2 à 40 nm et en particulier de 3 à 30 nm ;
B) mettre en contact au moins une partie de la composition durcissable avec une microstructure à relief superficiel, en particulier des moyens de formation d'image de couleur changeante ;
C) durcir la composition à l'aide d'au moins une lampe à UV.

2. Procédé selon la revendication 1 pour la formation d'une microstructure à relief superficiel, en particulier d'une image de couleur changeante sur un substrat transparent ou translucide comportant les étapes consistant à :
A) appliquer une composition durcissable sur au moins une partie du côté avant du substrat, la composition durcissable comprenant
a1) au moins une résine à insaturation éthylénique, un monomère ou un mélange de celle-ci ;
a2) au moins un photoinitiateur ; et
a3) au moins un pigment métallique qui a la forme de particules de métal de transition en forme de plaquette possédant une dimension la plus longue de longueur périphérique de 5 nm à 1 000 nm, de préférence de 7 nm à 600 nm et en particulier de 10 nm à 500 nm, et une épaisseur de 1 nm à 100 nm, de préférence de 2 à 40 nm et en particulier de 3 à 30 nm ;
B) mettre en contact au moins une partie de la composition durcissable avec une microstructure à relief superficiel, en particulier des moyens de formation d'image de couleur changeante ;
C) durcir la composition à l'aide d'au moins une lampe à UV qui est disposée sur le côté arrière du substrat transparent ou translucide.

3. Procédé selon la revendication 1 ou 2, dans lequel la lampe est une lampe au mercure moyenne pression dopée au gallium ou au fer.

4. Procédé selon la revendication 1, 2 ou 3, dans lequel le photoinitiateur est choisi entre la benzophénone, des composés du type alpha-hydroxycétone, des composés du type alpha-alcoxycétone, des composés du type alpha-aminocétone, des composés d'acide monoacylphosphine et bisacylphosphine, des composés phénylglyoxylate, des composés d'ester d'oxime et des composés de sel d'onium (composés de sel de sulfonium et composés de sel d'iodonium) et des mélanges de ceux-ci.

5. Procédé selon la revendication 4, dans lequel le photoinitiateur est choisi entre des composés d'acide monoacylphosphine et bisacylphosphine et des mélanges de ceux-ci.

6. Procédé selon l'une quelconque des revendications 1 à 5, dans lequel la composition durcissable comprend un mélange d'un composé d'oxyde de monoacylphosphine et/ou de bisacylphosphine avec un composé benzophénone, un composé alpha-hydroxycétone, alpha-alcoxycétone ou alpha-aminocétone.

7. Procédé selon l'une quelconque des revendications 1 à 6, dans lequel la composition durcissable comprend
(a) 5,0 à 0,6, en particulier 5,0 à 1,0, tout particulièrement 4,0 à 2,5 % en poids de photoinitiateur,
(b) 94,9 à 11,9, en particulier 94,1 à 19,0, tout particulièrement 76,0 à 47,5 % en poids d'une ou de plusieurs résines à insaturation éthylénique, des monomères ou des mélanges de celles-ci,
(c) 0,1 à 87,5, en particulier 1,0 à 80,0, tout particulièrement 20,0 à 50,0 % en poids du pigment métallique qui a la forme de particules de métal de transition en forme de plaquette définies ci-dessus
dans lequel la somme des constituants a) à c) permet d'obtenir 100 %.

8. Procédé selon l'une quelconque des revendications précédentes, dans lequel le métal est sélectionné dans le groupe constitué par Cu, Ag, Au, Zn, Cd, Ti, Cr, Mn, Fe, Co, Ni, Ru, Rh, Pd, Os, Ir et Pt, de préférence Ag et Cu, en particulier Ag.

9. Procédé selon l'une quelconque des revendications précédentes, dans lequel les particules en métal de transition en forme de plaquette possèdent une dimension la plus longue de longueur périphérique de 5 nm à 1 000 nm et une épaisseur de 1 à 100 nm et comprennent des prismes hexagonaux et/ou triangulaires et/ou triangulaires tronqués, lesquels prismes constituent plus de 20 % du nombre total de particules de métal de transition formées.

10. Procédé selon la revendication 2 à 9 dans lequel le substrat transparent ou translucide est choisi entre le papier et un polymère thermoplastique ou réticulé.

11. Procédé selon la revendication 10 dans lequel le substrat transparent ou translucide est un polymère thermoplastique choisi entre le polyester, le polychlorure de vinyle (PVC), le polyéthylène, le polycarbonate, le polypropylène ou le polystyrène.

12. Procédé selon l'une quelconque des revendications précédentes, dans lequel le moyen de formation de microstructure à relief superficiel est une lamelle choisie dans le groupe constitué par une gaine en nickel ; une plaque en nickel ; un tambour métallique gravé ou imagé par laser, ou d'autres matériaux montés sur un cylindre opaque ou un cylindre métallique contenant l'image de couleur changeante sur la surface.

13. Procédé selon la revendication 12, dans lequel la lamelle est une plaque en nickel montée sur un cylindre opaque ou un cylindre métallique et contenant l'image de couleur changeante sur la surface.

14. Procédé selon l'une quelconque des revendications précédentes dans lequel la microstructure à relief superficiel, en particulier une image de couleur changeante, est appliquée sur un élément de sécurité déjà existant, en particulier un hologramme.

15. Produit de sécurité contenant une microstructure à relief superficiel pouvant être obtenue selon le procédé selon les revendications 1 à 14.

16. Produit selon la revendication 15, qui comprend les billets de banque, les cartes de crédit, les documents d'identification tels que les passeports, les cartes d'identité, les permis de conduire, ou d'autres documents de vérification, des appareils pharmaceutiques, des logiciels, des disques compacts, des emballages de tabac et d'autres produits ou emballage susceptibles d'être contrefaits ou falsifiés.

17. Procédé selon les revendications 1 à 14 permettant de former un revêtement montrant un changement de couleur dépendant de l'angle sur un substrat.
